# EUROPÄISCHE PATENTSCHRIFT

(11) **EP 1 261 516 B1**
(45) Veröffentlichungstag und Bekanntmachung des Hinweises auf die Patenterteilung: **07.12.2005**
(21) Anmeldenummer: 01925380.6
(22) Anmeldetag: 06.03.2001
(51) Int. Cl.: B62K 3/00

(54) **REINIGUNGSWAGEN**
CLEANING TROLLEY
CHARIOT DE NETTOYAGE

(30) Priorität: 06.03.2000 DE 10010852
(43) Veröffentlichungstag der Anmeldung: 04.12.2002
(73) Patentinhaber: VERMOP SALMON GMBH, D-97877 Wertheim (DE)
(72) Erfinder: SALMON, Dirk, 97877 Wertheim (DE)
(74) Vertreter: HOFFMANN EITLE
(86) Internationale Anmeldenummer: PCT/EP2001/002522
(87) Internationale Veröffentlichungsnummer: WO 2001/066408

(56) Entgegenhaltungen:
- DE-A- 4 320 454
- DE-U- 29 514 920
- FR-A- 2 484 946
- FR-A- 2 607 089
- US-A- 3 834 726
- US-A- 5 913 528

## Beschreibung

### Hintergrund der Erfindung

Die Erfindung betrifft einen Reinigungswagen zur Verwendung zur Reinigung großer Gebäude gemäß dem Oberbegriff des Anspruchs 1.

Ein derartiger Reinigungswagen ist aus der DE 43 20 454 A1 oder US 5,913,528 bekannt.

Bei der Reinigung großer Gebäude, insbesondere von Fabrikhallen, Krankenhäusern und ähnlichem, kommen in der Regel sogenannte Reinigungswägen zum Einsatz (Fahrgestell). Diese Reinigungswägen umfassen im allgemeinen ein fahrbares Gestell; in dem die Reinigungskraft, die zur Reinigung des Gebäudes benötigten Reinigungsmittel sowie andere Zubehörteile, wie Eimer, Lappen usw., transportieren kann. Je nach Ausführungsform können weitere Bereiche vorgesehen sein, in denen Aufnahmeeinrichtungen für Müllsäcke, Putzeimer, Wischmops oder ähnliches angebracht sind.

Die Reinigungswägen dienen dazu, die erwähnten Zubehörteile zur Reinigung einfach und schnell zu transportieren. Somit tragen die Reinigungswägen zu einer ergonomischen Arbeitsweise der Reinigungskraft bei, da diese zum einen nicht gezwungen.ist', die Zubehörteile einzeln über lange Wegstrecken zu transportieren und zum anderen häufig verwendete Hilfsmittel in einer für die Reinigungskraft angenehmen Höhe auf dem Reinigungswagen untergebracht werden können. Die Gefahr eines unerwünschten Vergessens von Zubehörteilen nach der Reinigung einer Räumlichkeit bzw. des Verschüttens von Chemikalien zur Reinigung oder von Reinigungswasser ist zusätzlich vermindert, da alle Zubehörteile übersichtlich und standsicher in den Reinigungswägen untergebracht werden können.

### Stand der Technik

In der Technik sind Reinigungswägen in verschiedenen Ausführungsformen gut bekannt. Die Reinigungswägen weisen in der Regel einen Metallrahmen auf, in dem mehrere Querverbindungen und Körbe befestigt sind, in denen wiederum die Reinigungsmittel bzw. Eimer eingehängt bzw. gehaltert eingestellt werden können. Die Reinigungswägen gemäß dem Stand der Technik sind in der Regel mit vier Rädern ausgestattet, so dass ein leichtes Ziehen bzw. Schieben des Reinigungswagens möglich ist. Ein entsprechender Griff ist ebenfalls normalerweise vorgesehen.

Gemäß dem Stand der Technik ist es üblich, dass die Reinigungskraft den Reinigungswagen zieht bzw. schiebt, wobei sie selbst die erforderliche Wegstrecke zu Fuß zurücklegt. Gerade bei der Reinigung von großen Bürogebäuden oder anderen großen Flächen, wie Krankenhäusern oder Fabrikhallen, führt dies dazu, dass die Reinigungskraft beim Zurücklegen der Wegstrecken zwischen zu reinigenden Gebäudeteilen leicht ermüdet. Insbesondere wenn zwischen einzelnen zu reinigenden Flächen große Wegstrecken zurückzulegen sind oder große Wegstrecken hin zum zu reinigenden Gebäudeteil auftreten, beispielsweise lange Gänge oder Flure überbrückt werden müssen; tritt zusätzlich durch die Fortbewegung der Reinigungskraft zu Fuß ein merklicher Zeitverlust auf. Bei umfangreichem Reinigungszubehör ist es ferner ein Nachteil der Reinigungswägen der herkömmlichen Bauart, dass sie aufgrund des zu transportierenden Gewichts nur schwer handhabbar sind und sich nur bedingt manövrieren lassen. Das Gewicht der beladenen Reinigungswägen, das durch die Reinigungskraft geschoben werden muss, führt ebenfalls zur Ermüdung der Reinigungskraft, insbesondere beim Zurücklegen der Wegstrecken zwischen zu reinigenden Räumen.

Ein gattungsgemäßer, fahrbarer Reinigungswagen, der über eine Führungsdeichsel gezogen werden kann, ist in der

DE 43 30 454 A1 offenbart. An dem Hauptwagen können zusätzliche Einhängewagen befestigt werden. Ein Prinzip zur Verbindung von Anhängern an Reinigungswagen wird ebenfalls in der US 5,913,528 beschrieben.

Ein mehrspuriger Tretroller, mit dem eine Nutzlast transportiert werden kann, ist in der DE 295 14 920 U1 beschrieben. Dabei wird ein Tretroller, der zweispurig ausgeführt ist, mit einem mindestens einspurigen schwenkbaren Beiwagen rechts oder links des Trittbretts erweitert. Das heißt, die Gesamtbreite des Rollers bzw. des Beiwagens wird verbreitert. Dadurch ist es zwar möglich, die Gesamttransportkapazität des Tretrollers zu erhöhen, größere und schwerere Gegenstände, wie beispielsweise ein 'Reinigungswagen, sind auf diese Weise jedoch nicht transportierbar. Ferner ist durch das seitliche Anbringen eines Beiwagens am Tretroller ein Zugang zu dem im Beiwagen sich befindlichen Gegenständen erschwert, da an einer der normalerweise zum Zugang verwendeten Flächen, nämlich der seitlichen, der Roller angebracht ist.

In der US 3,834,726 wird ein Einkaufswagen, der mit einer Plattform für den Benutzer ausgestattet ist, beschrieben. Die an einen gewöhnlichen Einkaufswagen gekoppelte Plattform verfügt über Rolleinrichtungen und ermöglicht dem Benutzer mit einem Bein auf der Plattform zu stehen, während er mit dem anderen Bein den Einkaufswagen antreibt.

### Darstellung der Erfindung

Der Erfindung liegt die Aufgabe zugrunde, einen Reinigungswagen vorzuschlagen, der kraftschonend in großen Gebäuden bewegbar ist und mit Hilfe dessen eine zügige Reinigung großer Gebäude ermöglicht wird.

Diese Aufgabe wird durch einen Reinigungswagen mit den Merkmalen des Anspruchs 1 gelöst.

Der Erfindung liegt der Gedanke zugrunde, dass das in der Technik übliche Fahrgestell eines Reinigungswagens mit einer Stand- und/oder Sitzvorrichtung verbunden wird. Die Kombination eines herkömmlichen Fahrgestells eines Reinigungswagen mit einer Stand- und/oder Sitzvorrichtung bietet den Vorteil, dass die Reinigungskraft lange Strecken, die ohne Reinigung zu überwinden sind, schneller zurücklegen kann, indem der Reinigungswagen etwa durch Anschieben in Fahrt gebracht wird und sich die Reinigungskraft anschließend auf der Stand- und/oder Sitzvorrichtung mit dem rollenden Reinigungswagen mitbewegen kann, ohne erneut Kraft aufwenden zu müssen. Ähnlich wie bei einem herkömmlichen Roller, einem Skateboard oder einem Fahrrad gegenüber einem Fußgänger, ergibt sich ferner bei der Kombination einer Stand- und/oder Sitzvorrichtung mit einem Fahrgestell eines Reinigungswagens ein Geschwindigkeitsvorteil gegenüber dem Reinigungswagen, der in herkömmlicher Weise durch die sich zu Fuß fortbewegende Reinigungskraft anzuschieben ist. Da mit der Stand- und/oder Sitzvorrichtung alle herkömmlichen Arten von Reinigungswägen im Prinzip kombinierbar sind, bietet die erfindungsgemäße Einrichtung keinerlei Nachteil hinsichtlich der Möglichkeit des Transports von Reinigungsmitteln und Reinigungszubehör. Insbesondere ist es möglich, die Größe und den Aufbau des Fahrgestells geeignet auszuwählen, ohne Einschränkung der Möglichkeit, es mit einer Stand- und/oder Sitzvorrichtung zu kombinieren. Weiterhin weist die Stand- und/oder Sitzvorrichtung eine Lenkeinrichtung auf. Die Lenkeinrichtung dient dazu, die Wendigkeit des Reinigungswagens zu erhöhen.

Vorteilhafte Ausführungsformen sind durch die übrigen Ansprüche gekennzeichnet.

Bevorzugterweise umfaßt der Reinigungswagen weiterhin ein an der Stand- und/oder Sitzvorrichtung befestigtes Verbindungselement und mindestens ein am Reinigungswagen befestigtes Aufnahmeelement. Über dieses Verbindungselement und das Aufnahmeelement kann das Fahrgestell mit der Stand- und/oder Sitzvorrichtung verbunden werden. Abhängig von der Ausbildung der Stand- und/oder Sitzvorrichtung können das Verbindungs- und das Aufnahmeelement so gewählt werden, daß wahlweise eine feste, nur mit Aufwand, beispielsweise unter Zuhilfenahme von Werkzeug, lösbare Verbindung hergestellt wird oder daß das Aufnahmeelement zusammen mit dem Verbindungselement eine schnell lösbare Verbindung herstellt.

Eine schnell lösbare Verbindung, beispielsweise eine Schnappvorrichtung, eine Einhakvorrichtung oder ähnliches, ist insbesondere dann vorteilhaft, wenn mit dem Reinigungswagen Gebäude gereinigt werden sollen, bei denen ein Wechsel zwischen herkömmlichem Betrieb, also Schiebebetrieb, und Rollbetrieb des Reinigungswägens sinnvoll erscheint. Dies ist beispielsweise dann der Fall, wenn einerseits zwischen zu reinigenden Räumen lange Strecken zurückgelegt werden sollen, andererseits die zu reinigenden Bereiche beispielsweise groß und dennoch verwinkelt sind. Bei Verwendung einer schnell lösbaren Verbindung zwischen dem Fahrgestell und der Stand- und/oder Sitzvorrichtung wird in diesem Fall die Möglichkeit gegeben, die langen Strecken mit Hilfe der Stand- und/oder Sitzvorrichtung zurückzulegen, diese an einem bestimmten Punkt schnell und einfach abzukoppeln und anschließend den Reinigungswagen durch Schieben mit in den zu reinigenden Raum, nah an die zu reinigende Stelle, zu nehmen, wodurch der Reinigungszubehör weitgehend im Reinigungswagen belassen werden kann und nicht von Hand transportiert werden muß. Nach Reinigung des entsprechenden Gebäudeteils ist es andererseits ebenso rasch möglich, das Fahrgestell und die Stand- und/oder Sitzvorrichtung wieder zu verbinden und zum nächsten zu reinigenden Gebäudeteil zu rollen. Ein schnell zerlegbarer Reinigungswagen, also ein leicht von der Stand- und/oder Sitzvorrichtung trennbares Fahrgestell, ist ferner beim Transport des Reinigungswagens vorteilhaft, da dieser je nach zur Verfügung stehendem Platz im Transportgerät zerlegt werden kann. Auch bei Gebäuden, in denen eine Benutzung des Aufzugs erforderlich ist, ist es denkbar, daß die Kombination aus Stand- und/oder Sitzvorrichtung zu lang wird, um in dem Aufzug transportiert zu werden, und somit eine rasche Entkopplungseinrichtung vorteilhaft ist.

Erscheint eine solche Zerlegung der Stand- und/oder Sitzvorrichtung und des Fahrgestells nicht erforderlich, so ist eine festere Verbindung zwischen den beiden Bauteilen gleichermaßen zweckmäßig. In diesem Fall ist es möglich, das Aufnahmeelement am Fahrgestell und das Verbindungselement an der Stand- und/oder Sitzvorrichtung beispielsweise mittels einer Schraubenverbindung oder ähnlichem zu gestalten.

Prinzipiell ist es vorteilhaft, die Lenkeinrichtung an der Stand- und/oder Sitzvorrichtung zusätzlich zu einem am Fahrgestell vorhandenen Halte- bzw. Schiebegriff auszubilden. Insbesondere bei einer Entkopplung der Stand- und/oder Sitzvorrichtung vom Fahrgestell kann in diesem Fall das entkoppelte Fahrgestell mit den darin enthaltenen Reinigungszubehörteilen dennoch bequem geschoben oder gezogen werden. Die Lenkeinrichtung kann als gewöhnlicher.Lenker gestaltet sein, der über Verbindungselemente mit mindestens einem Teil der Räder der Stand- und/oder Sitzvorrichtung verbunden ist, so daß diese lenkbar wird.

Nach einer bevorzugten Ausführungsform ist die Stand-' und/oder Sitzvorrichtung ein Trittbrett. Ein Trittbrett, das gegebenenfalls direkt an dem Fahrgestell befestigt ist, ist als kostengünstige, platzsparende Variante der Stand- und/oder Sitzvorrichtung anzusehen. Mit Hilfe eines sich in der Regel am Fahrgestell befindlichen Griffs und des Trittbretts läßt sich das Fahrgestell ähnlich einem Roller vorwärts bewegen. Das bedeutet, daß die Reinigungskraft während des Transports des Reinigungswagens mit diesem mitfahren kann, sobald er in einem rollenden Zustand ist. Gegebenenfalls kann es vorteilhaft sein, an dem Trittbrett ein oder mehrere Abstützräder anzubringen, so daß sich eine Kippgefahr der Vorrichtung vermindert. Für die Fertigung des Trittbretts können verschiedene Materialien verwendet werden, beispielsweise Holz oder Kunststoff bzw. eine Kombination davon.

Es besteht weiterhin die Möglichkeit, an dem Verbindungselement, das an dem Trittbrett befestigt ist, oder an dem Aufnahmeelement am Fahrgestell, eine Vorrichtung anzubringen, die das Klappen des Trittbretts nach oben ermöglicht, beispielsweise ein Scharnier. Durch die Möglichkeit, das Trittbrett wegzuklappen, erleichtert sich ein Schieben des Reinigungswagens im konventionellen Betrieb, also dann, wenn die Reinigungskraft zu Fuß geht, da die Reinigungskraft nicht Gefahr läuft, an dem Trittbrett mit ihrem Schienbein anzustoßen. Als Klappeinrichtung kann ein gewöhnliches Scharnier, zum Beispiel ein elastisches Element oder ähnliches dienen. Ist eine Klappvorrichtung vorgesehen, so ist es vorteilhaft, ein zusätzliches Befestigungselement am Fahrgestell vorzusehen, das das Trittbrett im hochgeklappten Zustand am Fahrgestell befestigt.

Alternativ dazu kann die Stand- und/oder Sitzvorrichtung bevorzugterweise ein Roller sein. Ein Roller, der mit jeweils einem oder mehreren Rädern an seinem vorderen und hinteren Ende ausgestattet sein kann und gleichzeitig eine Lenkeinrichtung aufweist, ermöglicht ein zügiges Transportieren des Reinigungswagens. Wird der Roller selbst in einer klappbaren und vom Fahrgestell abkoppelbaren Version ausgeführt, so ist es möglich, ihn zum Transport nicht nur von dem Fahrgestell zu entfernen, sondern ihn zusätzlich auf engstem Raum zusammenzulegen. Ferner ist der Roller mit einem herkömmlichen Lenkmechanismus oder mit einer sogenannten Achsschenkellenkung ausgestattet. In diesem Fall wird die Lenkstange zur Seite gekippt, was über einen Übertragungsmechanismus zum Einschlagen der Vorderräder, in diesem Fall sind in der Regel zwei vorgesehen, in die gleiche Richtung führt. Als Werkstoffe für den Roller kommen verschiedene herkömmliche Werkstoffe in Frage, beispielsweise eine Aluminiumedelstahlkomination. Ein am Roller angebrachter Bremsmechanismus kann gegebenenfalls dazu dienen, den Roller und damit den gesamten Reinigungswagen rasch zu stoppen.

Nach einer weiteren Ausführungsform ist die Stand- und/oder Sitzvorrichtung ein Einrad. Das Einrad, das die verschiedensten Ausführungsformen haben kann, beispielsweise die Form eines abgeschnittenen herkömmlichen Fahrrads oder eines Hochrads, ermöglicht einen leichten ergonomischen Antrieb des Reinigungswagens, da die Kraftumsetzung der Muskelkraft der Reinigungskraft in Bewegungsenergie besonders günstig ist. In diesem Fall ist es besonders vorteilhaft, einen Bremsmechanismus vorzusehen, um die Geschwindigkeit, des Reinigungswagens ohne großen Kraftaufwand abbremsen zu können. Die Verbindung eines Einrads mit einem Fahrgestell zur Aufnahme der Reinigungsmittel und des Reinigungszubehörs bietet darüber hinaus den Vorteil, daß sich die Reinigungskraft bei der Zurücklegung größerer Wegstrecken setzen kann.

Das Aufnahmeelement, das als Verbindungsglied zwischen dem Fahrgestell und der Stand- und/oder Sitzvorrichtung dient, kann vorteilhafterweise im mittleren oder unteren Bereich des Fahrgestells bzw. der Fahrgestelle angeordnet sein. Je nach Ausbildung der Stand- und/oder Sitzvorrichtung ist eine Anbringung im unteren Bereich zu bevorzugen, um unnötig lange Verbindungsstücke und damit große Biegemomente zu vermeiden. Beispielsweise bei der Verwendung eines Trittbretts ist das Anbringen des Aufnahmeelements im unteren Bereich der Reinigungswagen vorzuziehen. Andere Varianten, etwa eine Stand- und/oder Sitzvorrichtung, die aus einem Sitz in mittlerer Höhe des Reinigungswagens sowie einem entsprechenden Abstützrad besteht, sind nach bevorzugten Ausführungsformen über ein Aufnahmeelement im mittleren Bereich des Fahrgestells an dieses ankoppelbar.

Hinsichtlich der Position in bezug auf die Fahrtrichtung des Fahrgestells und der Stand- und/oder Sitzvorrichtung bestehen ebenfalls unterschiedliche Möglichkeiten. Um den Reinigungszubehör im Auge zu haben und die Breite des Fahrgestells (das Fahrgestell ist in der Regel breiter als die Stand- und/oder Sitzvorrichtung) gut abschätzen zu können, ist es vorteilhaft, mindestens ein Fahrgestell in Fahrtrichtung vor der Stand- und/oder Sitzvorrichtung anzubringen. Manche Ausführungsformen der Stand- und/oder Sitzvorrichtung, etwa die in Form eines Trittbretts, sind besonders geeignet, hinter einem Fahrgestell angebracht zu sein.

Ein Anbringen der Stand- und/oder Sitzvorrichtung.in Fahrtrichtung vor dem Fahrgestell ist jedoch ebenso möglich und kann bevorzugt sein. Insbesondere bei der Ausbildung der Stand- und/oder Sitzvorrichtung in Form eines Rollers ist das Schwungholen in diesem Fall besonders günstig.

Ferner ist es selbstverständlich denkbar, in dem Fall, in dem mehrere Fahrgestelle mit einer Stand- und/oder Sitzvorrichtung kombiniert werden, einen Teil der Fahrgestelle in Fahrtrichtung vor der Stand- und/oder Sitzvorrichtung und einen anderen Teil der Fahrgestelle in Fahrtrichtung hinter der Stand- und/oder Sitzvorrichtung anzubringen. Insbesondere bei Verwendung von zwei Fahrgestellen bietet die Variante, eines vor und eines in Fahrtrichtung hinter der Stand- und/oder Sitzvorrichtung anzubringen, den Vorteil, daß ein insgesamt sehr kompakter Reinigungswagen entsteht. Dieser verhältnismäßig kompakte Reinigungswagen bleibt trotz seiner Größe gut lenkbar und wendig. Die Verbindungselemente zwischen den Fahrgestellen und der Stand- und/oder Sitzvorrichtung sind bevorzugterweise, in diesem Fall in gleicher Höhe anzubringen. Selbstverständlich ist es möglich, mehrere Fahrgestelle unmittelbar miteinander zu verbinden und diese Verbindung aus Fahrgestellen mit einer Stand- und/oder Sitzvorrichtung in der beschriebenen Weise zu koppeln.

Nach einer bevorzugten Ausführungsform umfaßt die Anordnung ferner mindestens eine Kupplungseinrichtung, die die Lenkbewegung von der Stand- und/oder Sitzvorrichtung an die Räder des mindestens einen Fahrgestells überträgt. Dadurch wird der Reinigungswagen gut lenkbar und ein Einsatz des Reinigungswagens in verhältnismäßig engen Gebäuden bleibt gewährleistet. Die Kupplungseinrichtung kann beispielsweise aus einem Gestänge bestehen, das von der Lenkeinrichtung der Stand- und/oder Sitzvorrichtung zu einem Teil der Räder des Fahrgestells führt und somit die Lenkbewegung an die Räder des Fahrgestells überträgt. Alternativ dazu kann die Kupplungseinrichtung z.B. eine Radachse der Stand- und/oder Sitzvorrichtung mit einer Radachse des Fahrgestells verbinden.

### Kurze Beschreibung der Zeichnungen

Nachfolgend wird die Erfindung rein beispielhaft anhand der beigefügten Figuren beschrieben, in denen:
- Fig. 1: eine Ausführungsform des erfindungsgemäßen Reinigungswagens zeigt, bei der die Stand- und/oder Sitzvorrichtung in Form eines Rollers ausgebildet ist und sich hinter dem Fahrgestell in nicht integrierter Bauweise befindet;
- Fig. 2: einen nicht erfindungsgemäßen Reinigungswagen zeigt, bei dem die Stand- und/oder Sitzvorrichtung in Form eines Trittbretts und in nicht integrierter Bauweise ausgebildet ist;
- Fig. 3: einen weiteren nicht erfindungsgemäßen Reinigungswagen zeigt, bei dem die Stand- und/oder Sitzvorrichtung in Form eines Trittbretts und in integrierter Bauweise ausgebildet ist;
- Fig. 4: eine weitere Ausführungsform des erfindungsgemäßen Reinigungswagens zeigt, bei der die Stand- und/oder Sitzvorrichtung in Form eines Einrads ausgebildet ist und sich hinter dem Fahrgestell befindet;
- Fig. 5: einen weiteren nicht erfindungsgemäßen Reinigungswagen zeigt, bei dem die Stand- und/oder Sitzvorrichtung in Form eines kompakten Einrads ausgebildet ist und sich hinter dem Fahrgestell befindet;
- Fig. 6: einen weiteren nicht erfindungsgemäßen Reinigungswagen zeigt, bei dem die Stand- und/oder Sitzvorrichtung in Form eines Sitzes mit Abstützrad ausgebildet ist;
- Fig. 7: einen weiteren nicht erfindungsgemäßen Reinigungswagen zeigt, bei dem die Stand- und/oder Sitzvorrichtung als Abstützsitz ausgebildet ist;
- Fig. 8: einen weiteren nicht erfindungsgemäßen Reinigungswagen zeigt, bei dem die Stand- und/oder Sitzvorrichtung in Form eines Abstützsitzes mit Trittbrett ausgeführt ist;
- Fig. 9: eine weitere Ausführungsform des erfindungsgemäßen Reinigungswagens zeigt, bei der die Stand- und/oder Sitzvorrichtung als mit dem Fahrgestell nicht integrierter Roller ausgebildet ist und sich in Fahrtrichtung vor dem Fahrgestell befindet;
- Fig. 10: einen weiteren nicht erfindungsgemäßen Reinigungswagen zeigt, bei dem zwei Fahrgestelle über eine dazwischenliegende Standvorrichtung verbunden sind;
- Fig. 11: eine Seitenansicht einer Kupplungseinrichtung zwischen Fahrgestell und einem Roller zeigt; und
- Fig. 12: eine Draufsicht auf die Kupplungseinrichtung aus Fig. 11 zeigt.

### Wege zur Ausführung der Erfindung

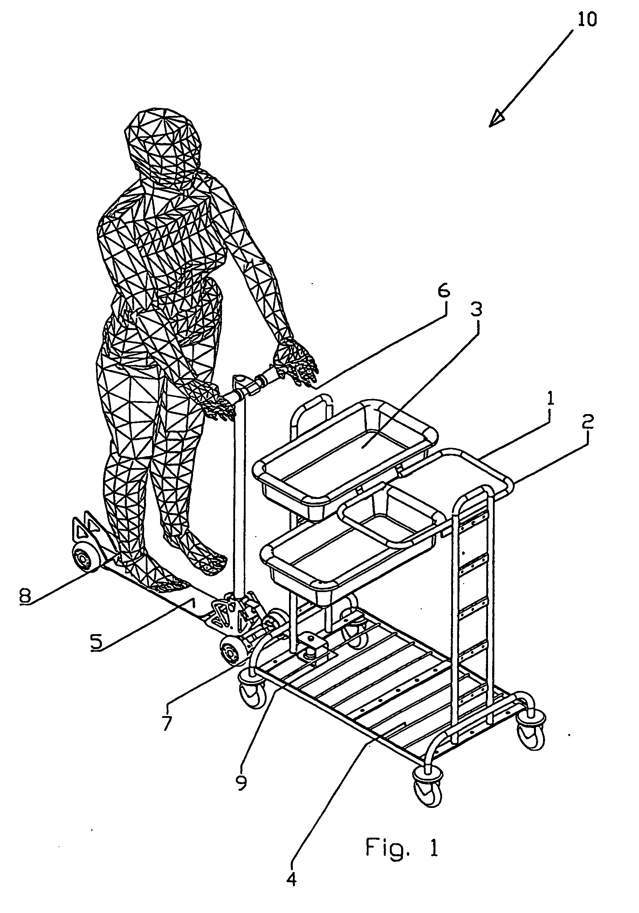

Fig. 1 zeigt einen Reinigungswagen 10, der ein Fahrgestell 1 und einen Roller 5 umfaßt. Am Fahrgestellt 1 sind zahlreiche Halterungen 2 und Schalen 3 angebracht, in die Reinigungszubehör eingestellt werden kann. Im unteren Bereich des dargestellten Reinigungswagens ist am Fahrgestell 1 eine Aufnahme- und Abstellfläche 4 für sperriges Reinigungszubehör vorgesehen. Das in Fahrtrichtung vordere Ende des Rollers 5 ist über ein am Roller 5 angebrachtes Verbindungselement 7 mit einem Aufnahmeelement 9, das in der dargestellten Ausführungsform am hinteren Ende des Fahrgestells befestigt ist, angebracht. Die Verbindung 7, 9 befindet sich im unteren Bereich des Rollers 5 bzw. des Fahrgestells 1. Eine Vorrichtung zur Übertragung der Lenkbewegung von dem Roller 5 an die Räder des Fahrgestells 1 bzw. einen Teil der Räder des Fahrgestells 1 ist anbringbar (nicht dargestellt). Die Reinigungskraft kann sich, wie dargestellt, auf die Standfläche des Rollers 5, der in diesem Fall zweispurig gestaltet ist, stellen und am Griff 6 des Rollers halten.

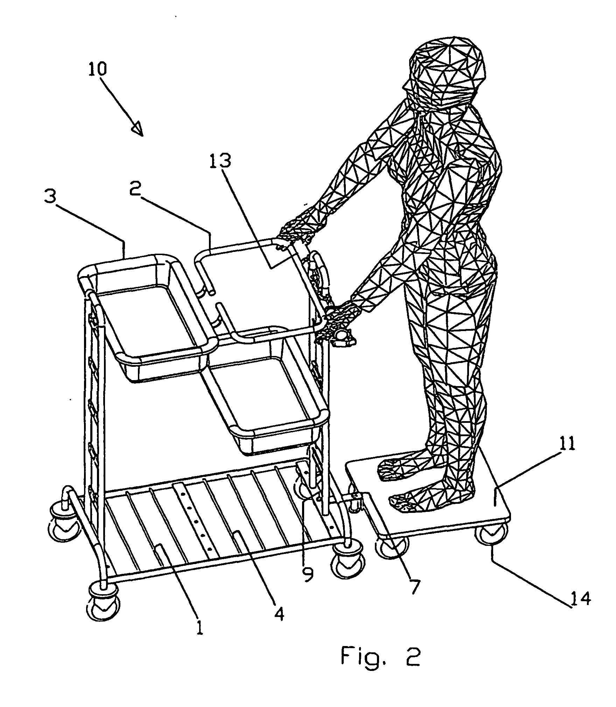

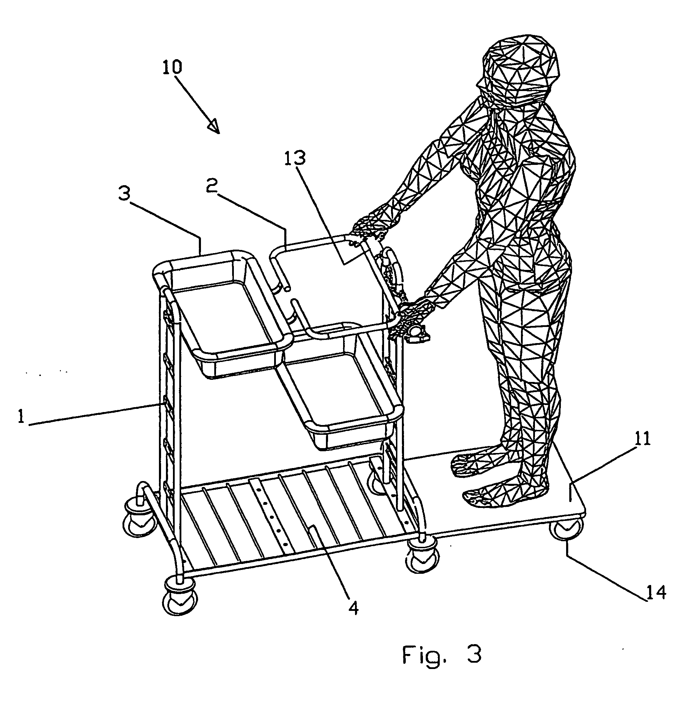

Fig. 2 und 3 zeigen weitere Reinigungswagen 10. In diesen nicht erfindungsgemäßen Ausführungsformen ist an einem Fahrgestell 1 ein Trittbrett 11 angebracht. Dabei kann das Trittbrett integriert mit dem Fahrgestell 1 sein (Fig. 3), oder über Verbindungselemente 7, 9, ähnlich wie in Fig. 1 gezeigt, an dem Fahrgestell angebracht sein (Fig. 2). Das Trittbrett 11 befindet sich im unteren, hinteren Endbereich des Fahrgestells 1. Ferner weist das Fahrgestell 1 einen Griff 13 auf. Der Griff 13 und das Trittbrett 11 stellen zusammen eine Standvorrichtung dar, auf die sich die Reinigungskraft stellen kann. Der Griff 13 ist integriert mit dem Fahrgestell ausgebildet und in der Regel bereits an herkömmlichen Reinigungswägen, die zum schiebenden Betrieb gedacht sind, vorhanden. Das Trittbrett 11 ist in der in Fig. 3 gezeigten Ausführungsform ebenfalls integriert mit dem Fahrgestell 1 ausgebildet, kann selbstverständlich jedoch demnach von diesem entkoppelbar sein. Ferner kann das Trittbrett 11 einen Klappmechanismus (nicht gezeigt) aufweisen, so daß das Trittbrett, wenn es nicht benötigt wird, nach oben geklappt werden kann. In entsprechender Höhe kann dazu an dem Reinigungswagen ferner eine Befestigungsvorrichtung (nicht gezeigt) vorhanden sein, die das Trittbrett 11 in einer möglichen hochgeklappten Position sichert. In der dargestellten Ausführungsform weist das Trittbrett Abstützräder 14 auf. Prinzipiell ist selbstverständlich auch eine Gestaltung ohne solche Abstützräder möglich.

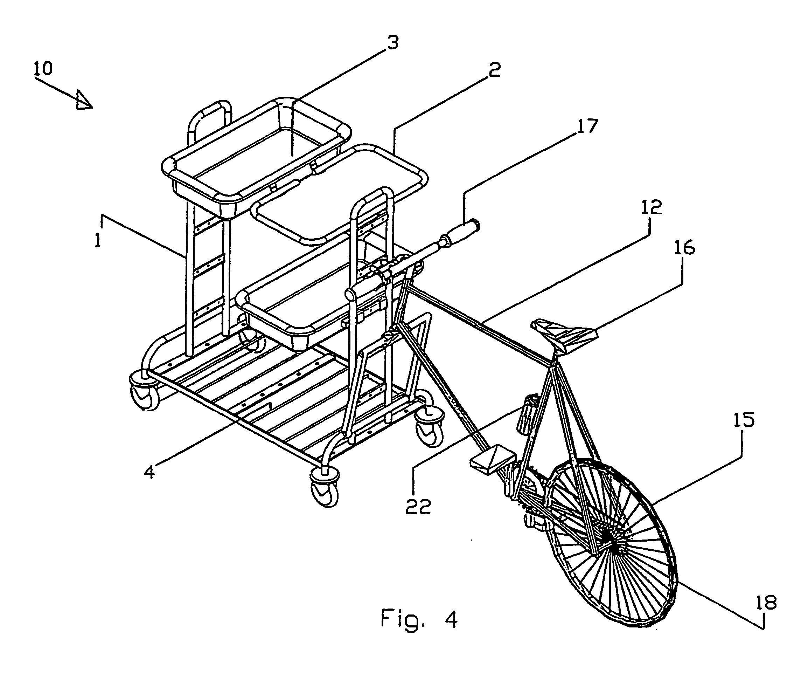

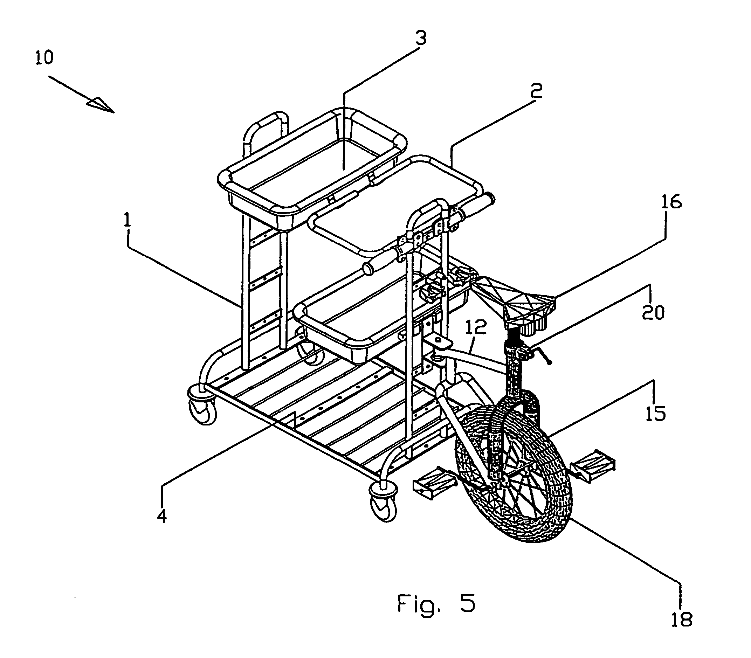

Fig. 4 und 5 zeigen Ausführungsformen des Reinigungswagens, bei dem ein Fahrgestell 1 mit einem Einrad 15 verbunden ist. Fig. 5 zeigt dabei eine sehr kompakte Bauweise, bei der das Rad 18 des Einrads direkt unter dessen Sitzfläche 16 ausgebildet ist. Das in der Fig. 4 gezeigten Ausführungsform verwendete Einrad 15 weist eine Form auf, die einem herkömmlichen Fahrrad ähnlich ist. Bei der nicht erfindungsgemäßen Ausführungsform nach Fig. 5 ist das Einrad so geformt, daß sich das Rad 18 direkt unterhalb der Sitzfläche 16 befindet. Bei der in Fig. 4 dargestellten Ausführungsform ist ferner eine separate Halte- und Lenkeinrichtung 17 am Einrad angebracht. Das Einrad 15 ist in Fahrtrichtung hinter dem Fahrgestell 1 angebracht und die Lenkeinrichtung 17 direkt mit dem hinteren Rad bzw. den hinteren Rädern des Fahrgestells 1 verbunden. Weitere Komfortmerkmale können vorhanden sein. So weist z.B. der Sitz 16 in Fig. 5 eine Höhenverstelleinrichtung 20 auf. Ein Behältnis 22 für persönliches Zubehör der Reinigungskraft ist am Verbindungsgestänge 12 zwischen Fahrgestellt 1 und Rad 15 anbringbar.

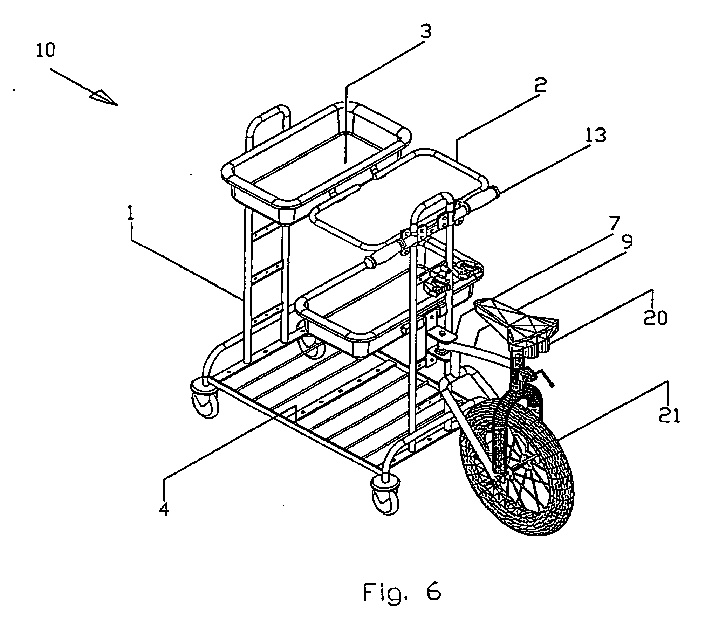

Eine weitere nicht erfindungsgemäße Ausführungsform ist in Fig. 6 dargestellt. Diese Ausführungsform weist eine Sitzvorrichtung auf, die aus einem Sitz 19 besteht, der knapp unterhalb der Sitzhöhe mit dem Fahrgestell 1 über ein Verbindungs- und ein Aufnahmeelement 7, 9 an der Sitzvorrichtung bzw. am Fahrgestell verbunden ist. Zur Abstützung weist diese Ausführungsform zusätzlich ein Stützrad 21 auf, das sich im wesentlichen senkrecht unterhalb der Sitzfläche 19 befindet. Die gezeigte Sitzvorrichtung kann von dem Fahrgestell 1 entkoppelbar ausgebildet sein. Als Haltevorrichtung und Griff für die Arme der Reinigungskraft dient ein am Fahrgestell 1 angebrachter Griff 13. Eine Einrichtung zur Höhenverstellung der Sitzfläche ist vorgesehen.

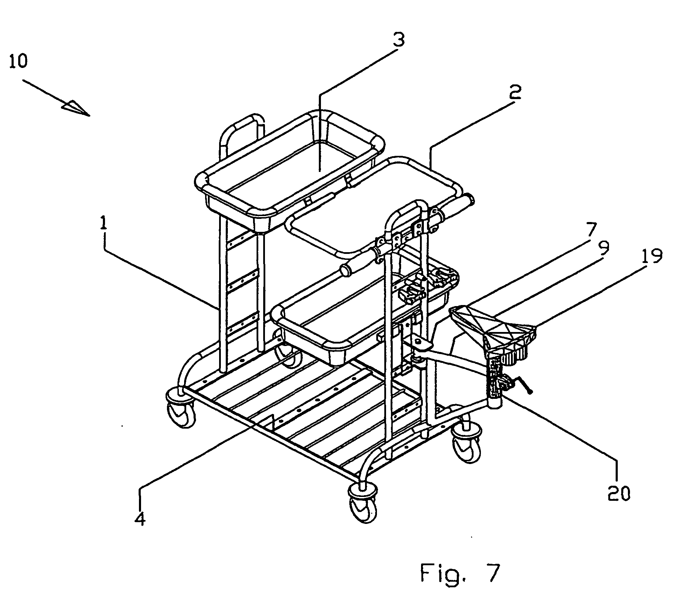

Die in Fig. 7 gezeigte nicht erfindungsgemäße Ausführungsform des Reinigungswagens entspricht im wesentlichen der in Fig. 4 gezeigten Ausführungsform. Wiederum ist eine Sitzvorrichtung 19 mit dem Fahrgestell 1 verbunden. Es ist jedoch kein Stützrad vorgesehen.

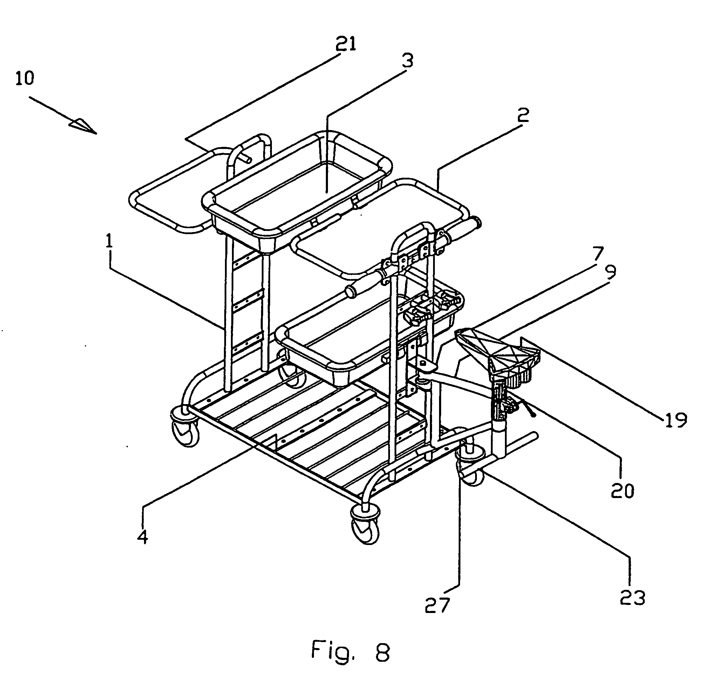

Fig. 8 zeigt wiederum eine andere nicht erfindungsgemäße Ausführungsform des Reinigungswagens. Ein Fahrgestell 1, an dem zusätzlich eine Aufnahmevorrichtung 21 für einen Müllbehälter angebracht ist, ist mit einem Sitz 19 in geeigneter Sitzhöhe versehen. Ferner ist eine trittbrettartige Einrichtung 23 vorgesehen, die das Abstützen eines Fußes bzw. beider Füße ermöglicht, wenn der Reinigungswagen rollt bzw. zum Anrollen. Die Abstützeinrichtung 23 kann entweder direkt mit dem Fahrgestell 1 verbunden sein oder aber über ein Verbindungselement, das von einem Gestänge 27, das das Fahrgestell mit dem Sitz 19 verbindet, wie gezeigt, verzweigen. Diese kombinierte Sitz- und Standvorrichtung ist in Fahrtrichtung hinter dem Fahrgestell 1 angebracht.

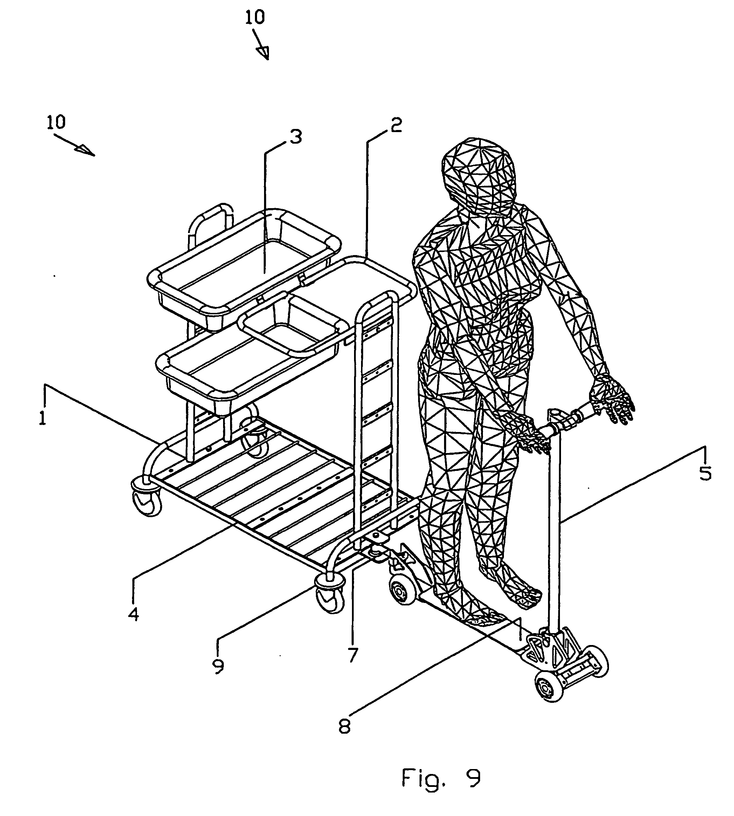

Fig. 9 zeigt eine weitere Ausführungsform des erfindungsgemäße Reinigungswagens 10. Ein Roller 5 ist integriert mit einem Fahrgestell 1 verbunden. Der Roller 5 befindet sich in Fahrtrichtung vor dem Fahrgestell 1. In der gezeigten Ausführungsform ist der Roller 5 nicht integriert mit dem Fahrgestell 1 gestaltet, das heißt insbesondere, daß eine zusätzliche Verbindungseinrichtung 7, 9 zum An- und Entkoppeln des Fahrgestells 1 an den Roller 5 vorgesehen ist. Dies kann auch über einen Schnellentkopplungsmechanismus geschehen.

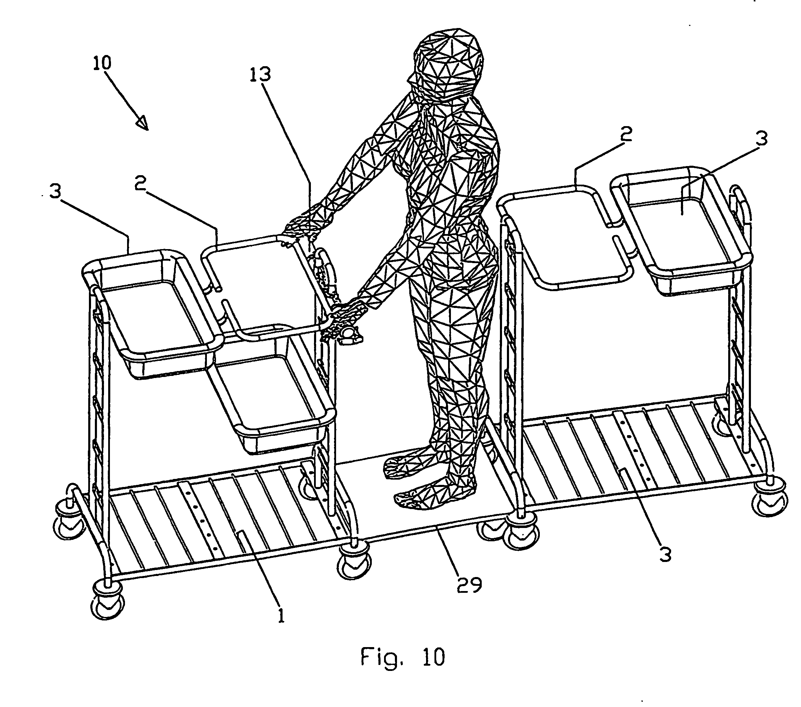

Fig. 10 zeigt eine nicht erfindungsgemäße Ausführungsform, die zwei Fahrgestelle 1, 3 und eine Standvorrichtung 29 umfaßt. Die Anordnung ist hier so gewählt, daß sich die Standvorrichtung 29 zwischen den beiden Fahrgestellen 1, 3 befindet. Zweckmäßigerweise ist die Sitzvorrichtung in der gezeigten Ausführungsform im unteren Bereich mit den Fahrgestellen 1, 3 verbunden. Ein an einem der Fahrgestelle vorhandener Griff 13 dient als Halteeinrichtung für die Reinigungskraft. Selbstverständlich können an beiden Fahrgestellen 1, 3 Griffe vorgesehen sein, die ermöglichen, dass der Reinigungswagen 10 bei einem Wechsel der Fahrtrichtung nicht gewendet werden muß. Wie in allen gezeigten Ausführungsformen ist die Standvorrichtung in die Fahrgestelle 1, 3 bzw. in eines der Fahrgestelle 1, 3, wie gezeigt, integrierbar oder kann als separates Element gestaltet werden, das über Verbindungselemente ankoppelbar ist. Ebenso kann die Verbindung zwischen der Standvorrichtung und dem Fahrgestell schnell lösbar gestaltet sein oder aber fest.

Die Funktionsweise der in den Fig. 1 bis 10 dargestellten Reinigungswägen 10 ist jeweils ähnlich. In das Fahrgestell 1 können die verschiedenen Reinigungsmittel eingestellt werden und anderes Reinigungszubehör, wie Eimer, Wischer oder Müllbeutel und ähnliches untergebracht werden. Diese Reinigungswägen 1, die dem Stand der Technik zugerechnet werden können und meist aus Leichtmetallwerkstoffen gefertigt werden, sind in verschiedenen Größen erhältlich, wobei abhängig von der Größe unterschiedliche Einstellmöglichkeiten für Reinigungszubehör gegeben sind. Selbstverständlich kann jede der vorhandenen Größen und Ausführungen prinzipiell mit einer Stand- und/oder Sitzvorrichtung gemäß der Erfindung kombiniert werden, so daß ein Einsatz von Reinigungswagen in großen Gebäuden ergonomischer wird.

Nachdem die Reinigungskraft den Reinigungszubehör in das Fahrgestell 1 eingestellt hat, kann sie, wenn es sich um eine nicht fest verbundene Ausführungsform handelt, die Stand- und/oder Sitzvorrichtung, also den Roller, das Trittbrett, das Einrad oder ähnliches, an das Fahrgestell über ein Verbindungs- und/oder Aufnahmeelement koppeln. Anschließend kann der so bestückte Reinigungswagen verwendet werden, um zum eigentlichen zu reinigenden Gebäudeteil zu gelangen. Dazu wird der Reinigungswagen über die Stand- und/oder Sitzvorrichtung durch Anschieben bzw. Antreten zunächst von der Reinigungskraft in eine Bewegung mit einer bestimmten Geschwindigkeit gebracht. Im Fall des Rollers (Fig. 1, 9), des Trittbretts (Fig. 2, 3 und 10) oder der Sitzvorrichtung (Fig. 6, 7 und 8) geschieht dies in bekannter Weise durch Anschieben mit einem Bein, während das andere Bein auf der Standvorrichtung bleibt. Im Fall des Einrads (Fig. 4 und 5) wird der Reinigungswagen durch Treten beschleunigt. Ist eine bestimmte Geschwindigkeit erreicht, kann die Reinigungskraft auch das zweite Bein auf die Standvorrichtung nehmen bzw. sich vollständig auf den Sitz setzen, und sich von der Rollbewegung des Reinigungswagens 10 mitbewegen lassen. Wird die Geschwindigkeit zu gering, so kann ein erneuter Beschleunigungsvorgang wie oben beschrieben stattfinden. Mit Hilfe einer ggf. vorhandenen (nicht dargestellten) Bremseinrichtung kann der Reinigungswagen 10, wenn das Ziel erreicht ist, gestoppt werden. Ist keine Bremseinrichtung vorhanden, so ist ein entsprechendes Dosieren der Geschwindigkeit und Ausrollen erforderlich. Anschließend kann die Reinigungskraft bei koppelbaren Ausführungsformen den Reinigungswagen von der Stand- und/oder Sitzvorrichtung trennen und ihn in gewohnter Weise durch Schieben mit in den zu reinigenden Raum des Gebäudes nehmen. Anderenfalls, bei fest verbundenen Ausführungsformen, wird der Reinigungsvorgang sofort beginnen. Nach Beendigung der Reinigung eines Gebäudeteils kann die Reinigungskraft gegebenenfalls das Fahrgestell wieder an die Stand- und/oder Sitzvorrichtung koppeln und in der oben beschriebenen Weise den Weg zum nächsten zu reinigenden Gebäudeteil zurücklegen bzw. den Rückweg antreten.

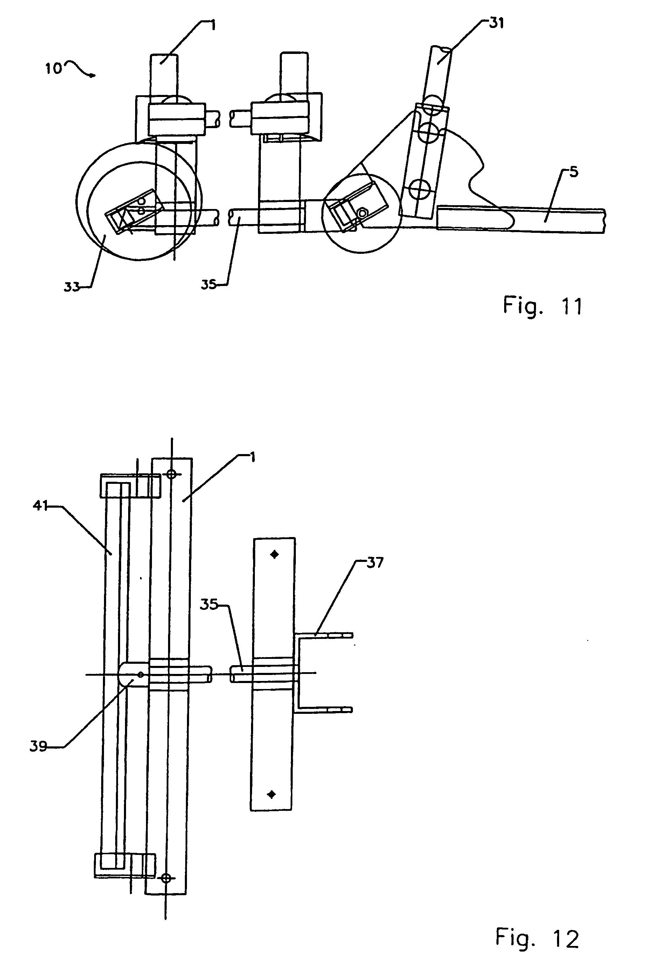

Fig. 11 und 12 zeigen eine Ausführungsform einer Kupplungsvorrichtung zwischen der Stand- und/oder Sitzvorrichtung und dem Fahrgestell. Fig. 11 zeigt eine Seitenansicht, Fig. 12 eine Draufsicht. Beispielhaft dargestellt ist in Fig. 11 ein Roller 5, der mit einem Fahrgestell 1 verbunden ist. Die Ausführungsform ist in integrierter Bauweise und dergestalt, daß sich der Roller 5 in Fahrtrichtung hinter dem Fahrgestell 1 befindet. Zur Übertragung der Lenkbewegung von der Lenkstange 31 auf die Vorderräder 33 des Fahrgestells ist eine Verbindungsstange 35 vorgesehen, die die Lenkbewegung, die von der Lenkstange 31 des Rollers ausgeht, über eine Aufnahmevorrichtung 37 zu einem weiteren Verbindungsglied 39 überträgt, das wiederum mit einem Gestänge 41 verbunden ist, das schließlich dazu geeignet ist, die Lenkbewegung an die Räder 33 des Fahrgestellts zu übertragen. Als besonders geeignet haben sich Raddurchmesser der Vorderräder des Fahrgestells von 100 bis 125 mm erwiesen. Selbstverständlich ist die Erfindung nicht auf die dargestellte Kupplungseinrichtung beschränkt. Vielmehr können verschiedene Kupplungseinrichtungen, die in der Technik üblich sind, zum Einsatz kommen.

Der wesentliche Aspekt des erfindungsgemäßen Reinigungswagens liegt darin, daß bei der Reinigung von großen Gebäuden, in denen lange Wegstrecken zurückzulegen sind, ein Zeitvorteil erzielt werden kann, indem lange Zwischenstrecken unter Zuhilfenahme einer Stand- und/oder Sitzvorrichtung, die fest verbunden oder koppelbar mit einem Fahrgestell ausgebildet ist, zurückgelegt werden können. Die Bauweise des erfindungsgemäßen Reinigungswagens ist dabei dergestalt, daß herkömmliche Reinigungswägen, die für den Schiebebetrieb geeignet sind, in verhältnismäßig unaufwendiger Weise umgerüstet werden können. Als Stand- und/oder Sitzvorrichtung kommen ebenfalls gängige Elemente in Frage, insbesondere' Roller, Tritt- bzw. Standbretter oder Einräder.

## Patentansprüche

1. Reinigungswagen (10) zur Aufnahme von Reinigungszubehör zum Einsatz in großen Gebäuden, umfassend mindestens ein Fahrgestell (1) mit Rädern;
**dadurch gekennzeichnet, dass**
das Fahrgestell mit einer Stand- und/oder Sitzvorrichtung für die Reinigungskraft verbunden ist, wobei die Stand- und/oder Sitzvorrichtung eine Lenkeinrichtung (17) mit einem von des Reinigungskraft zu ergreifenden Lenker mit Lenkstange aufweist.

2. Reinigungswagen nach Anspruch 1, weiter umfassend mindestens ein an der Stand- und/oder Sitzvorrichtung befestigtes Verbindungselement (7) und mindestens ein an dem mindestens einen Fahrgestell befestigtes Aufnahmeelement (9) zur Verbindung des mindestens einen Fahrgestells mit der Stand- und/oder Sitzvorrichtung.

3. Reinigungswagen nach einem der vorhergehenden Ansprüche, **dadurch gekennzeichnet, dass** die Stand- und/oder Sitzvorrichtung ein Trittbrett (11) ist.

4. Reinigungswagen nach Anspruch 3, **dadurch gekennzeichnet, dass** die Stand- und/oder Sitzvorrichtung ein Roller (5) ist.

5. Reinigungswagen nach einem der Ansprüche 1 bis 3, **dadurch gekennzeichnet, dass** die Stand- und/oder Sitzvorrichtung ein Einrad (15) ist.

6. Reinigungswagen nach Anspruch 2 **dadurch gekennzeichnet, dass** das mindestens eine Aufnahmeelement im unteren oder mittleren Bereich des mindestens einen Fahrgestells angebracht ist.

7. Reinigungswagen nach einem der vorhergehenden Ansprüche, **dadurch gekennzeichnet, dass** mindestens ein Fahrgestell in Fahrtrichtung vor der Stand- und/oder Sitzvorrichtung angebracht ist.

8. Reinigungswagen nach einem der vorhergehenden Ansprüche, **dadurch gekennzeichnet, dass** mindestens ein Fahrgestell in Fahrtrichtung hinter der Stand- und/oder Sitzvorrichtung angebracht ist.

9. Reinigungswagen nach einem der Ansprüche 1 bis 8, weiter umfassend mindestens eine Kupplungseinrichtung zur Übertragung der Lenkbewegung von der Stand- und/oder Sitzvorrichtung an die Räder (33) des mindestens einen Fahrgestells.

## Claims

1. Cleaning cart (10) for accommodating cleaning equipment for use in large buildings comprising at least a chassis (1) with wheels, **characterised in that** the chassis is connected to a stand and/or seat device for the cleaner, wherein the stand and/or seat device possesses a steering device (17) having a handlebar to be gripped by the cleaner together with a steering rod.

2. Cleaning cart according to claim 1, further comprising at least one connecting element (7) fastened to the stand and/or seat device and at least one accommodation element (9) fastened to the at least single chassis for connecting the at least single chassis to the stand and/or seat device.

3. Cleaning cart according to any of the preceding claims, **characterised in that** the stand and/or seat device is a running board (11).

4. Cleaning cart according to claim 3, **characterised in that** the stand and/or seat device is a scooter (5).

5. Cleaning cart according to any of claims 1 to 3, **characterised in that** the stand and/or seat device is a unicycle (15).

6. Cleaning cart according to claim 2, **characterised in that** the at least single accommodation element is attached in the lower or central region of the at least single chassis.

7. Cleaning cart according to any of the preceding claims, **characterised in that** at least one chassis is attached in front of the stand and/or seat device in the direction of travel.

8. Cleaning cart according to any of the preceding claims, **characterised in that** at least one chassis is attached behind the stand and/or seat device in the direction of travel.

9. Cleaning cart according to any of claims 1 to 8 further comprising at least one coupling device for transmitting the steering movement from the stand and/or seat device to the wheels to the wheels (33) of the at least single chassis.

## Revendications

1. Chariot de nettoyage (10), devant recevoir des accessoires de nettoyage pour utilisation dans de grands bâtiments, comprenant au moins un châssis (1) avec des roues ;
**caractérisé en ce que** le châssis est relié à un dispositif permettant de se tenir debout et/ou assis pour le personnel de nettoyage, le dispositif permettant de se tenir debout et/ou assis présentant un dispositif directionnel (17) avec un bras articulé, à saisir par le personnel de nettoyage, avec un guidon.

2. Chariot de nettoyage selon la revendication 1, comprenant en outre au moins un élément de liaison (7), fixé au dispositif permettant de se tenir debout et/ou assis, et avec au moins un élément formant support (9) fixé au au moins un châssis, pour assurer la liaison du au moins un châssis au dispositif permettant de se tenir debout et/ou assis.

3. Chariot de nettoyage selon l'une des revendications précédentes, **caractérisé en ce que** le dispositif permettant de se tenir debout et/ou assis est un marchepied (11).

4. Chariot de nettoyage selon la revendication 3,
**caractérisé en ce que**
le dispositif permettant de se tenir debout et/ou assis est une patinette (5).

5. Chariot de nettoyage selon l'une des revendications 1 à 3, **caractérisé en ce que** le dispositif permettant de se tenir debout et/ou assis est un monocycle (15).

6. Chariot de nettoyage selon la revendication 2, **caractérisé en ce que** le au moins un élément formant support est monté dans la zone inférieure ou médiane du au moins un châssis.

7. Chariot de nettoyage selon l'une des revendications précédentes, **caractérisé en ce qu'**au moins un châssis est monté devant le dispositif permettant de se tenir debout et/ou assis, en observant dans la direction de transport.

8. Chariot de nettoyage selon l'une des revendications précédentes, **caractérisé en ce qu'**au moins un châssis est monté derrière le dispositif permettant de se tenir debout et/ou assis, en observant dans la direction de roulage.

9. Chariot de nettoyage selon l'une des revendications 1 à 8, comprenant en outre au moins un dispositif d'accouplement pour transmission du mouvement directionnel, du dispositif permettant de se tenir debout et/ou assis aux roues (33) du au moins un châssis
